(19) Europäisches Patentamt
European Patent Office
Office européen des brevets

(11) **EP 4 782 468 A1**

(12) **EUROPEAN PATENT APPLICATION**

(43) Date of publication:
**29.07.2026 Bulletin 2026/31**

(21) Application number: **26153733.6**

(22) Date of filing: **23.01.2026**

(51) International Patent Classification (IPC):
***C08F 8/50*** (2006.01)     ***C08L 53/02*** (2006.01)
***C08F 8/46*** (2006.01)     ***C08L 91/00*** (2006.01)

(52) Cooperative Patent Classification (CPC):
(C-Sets available)
**C08L 53/025; C08F 8/42; C08F 8/46; C08F 8/50;**
**C08L 23/20; C08L 91/00;** C08F 2810/10;
C08L 2205/025; C08L 2205/03     (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **24.01.2025 US 202563749032 P**

(71) Applicant: **Kraton Polymers Nederland B.V.**
**1322 CE Almere (NL)**

(72) Inventors:
• **MUYLDERMANS, Xavier**
**Houston, 77084 (US)**

• **SUN, Tom**
**Houston, 77084 (US)**
• **MA, Biao**
**Houston, 77084 (US)**
• **NIU, Yaming**
**Houston, 77084 (US)**
• **LI, Chunfa**
**Houston, 77084 (US)**
• **LIU, Xu**
**Houston, 77084 (US)**

(74) Representative: **Henkel & Partner mbB**
**Patentanwaltskanzlei, Rechtsanwaltskanzlei**
**Maximiliansplatz 21**
**80333 München (DE)**

(54) **LOW MELT FLOW VISBROKEN HYDROGENATED STYRENIC BLOCK COPOLYMERS**

(57)     A visbroken hydrogenated styrenic block copolymer (m-HSBC) is disclosed. The polymer comprises at least one vinyl-aromatic block "S" and at least one rubbery block "R" derived from hydrogenated diene units. The visbroken HSBC is produced by controlled chain scission of a high-molecular-weight HSBC precursor and retains a GPC major peak molecular weight ($M_p$) of greater than 200 kg/mol. The visbroken HSBC exhibits a very low melt flow rate (MFR) of < 10 g/10 min when measured at 190°C under a 2.16 kg load. The visbroken HSBC provides a balance of controlled melt flow, elasticity, and mechanical integrity, making it particularly suitable for foam and foam-forming compositions.

FIG.1

(52) Cooperative Patent Classification (CPC): (Cont.)

C-Sets
**C08F 8/42, C08F 8/50, C08F 8/04, C08F 297/04;**
**C08F 8/46, C08F 8/50, C08F 8/04, C08F 297/04;**
**C08F 8/50, C08F 8/04, C08F 297/04;**
**C08K 5/09, C08L 53/025;**
**C08K 5/14, C08L 53/025;**
**C08L 23/20, C08L 23/20, C08L 53/025;**
**C08L 53/025, C08L 53/025;**
**C08L 91/00, C08L 53/025, C08L 23/12**

## Description

### TECHNICAL FIELD

The disclosure relates to high melt flow hydrogenated styrenic block copolymers and compositions thereof.

### BACKGROUND

Hydrogenated styrenic block copolymers (HSBCs) are widely used in a broad range of applications due to their desirable combination of elasticity, strength, thermal stability, and chemical resistance. In many end uses, including films, adhesives, medical devices, sealants, and polymer-modified elastomers, there is an increasing demand for HSBC-based materials that exhibit very low melt flow rates (MFRs) at processing temperatures while retaining excellent mechanical and thermomechanical integrity.

Conventionally, low-MFR materials are obtained by increasing polymer molecular weight; however, simply using a very high molecular weight HSBC often introduces severe processing challenges, including poor melt homogeneity, excessive energy consumption during melt processing, or the formation of gels or inhomogeneous domains. Moreover, extremely high-molecular-weight HSBCs produced directly by polymerization may lack the tailored molecular-weight distributions needed to balance processability, elasticity, and stability. Strategies based on blending with rigid or amorphous polymers likewise fail to provide the necessary rubbery behavior, or morphological uniformity.

There is still a need for an HSBC-based material that provides low melt flow rate at processing temperatures while retaining elasticity, structural cohesion, and compatibility with polymer-blending and fabrication processes.

### SUMMARY

In one aspect, the disclosure relates to a visbroken hydrogenated styrenic block copolymer (visbroken HSBC) comprising: at least one block "S" composed of vinyl aromatic units, and at least one block "R" composed of hydrogenated diene units. The diene units have a hydrogenation level > 50%, measured by $^1$H NMR. The visbroken HSBC is characterized by: a Low Mw Broadness Index (LMBI) $\geq$ 25%; a GPC major peak molecular weight ($M_p$) of > 200 kg/mol, measured according to ASTM D5296; a GPC molecular weight ($M_p$) of at least one block "S" of > 20 kg/mol, measured according to ASTM D5296; a residual unsaturation (RU) of up to 0.5 meq/g, measured by $^1$H NMR; and a melt flow rate (MFR) of 0 to 10 g/10 min at 190°C with a 2.16 kg load, measured according to ASTM D1238.

In a second aspect, the visbroken HSBC has at least one of: a tan $\delta$ value at 50°C of 0.08 to 1, measured by dynamic mechanical analysis; a tan $\delta$ peak temperature of -42 to 20°C, measured by dynamic mechanical analysis; and an aliphatic methyl proton index (AIMPI) of 18 to 45%, determined by $^1$H NMR.

In a third aspect, the visbroken HSBC has at least one of: aromatic protons from 1 to 30%; an aromatic blocky proton index of 10 to 50%; and an aliphatic methyl proton index (AIMPI) of 23 to 40%; all properties are measured by $^1$H NMR.

In a fourth aspect, the disclosure also related to a polymer composition comprising, consisting essentially of, or consisting of: (a) 100 phr of a HSBC component comprising (i) the visbroken HSBC and (ii) a HSBC precursor that has not been visbroken; (b) 50 to 200 phr of oil; (c) 5 to 50 phr of a polyolefin; and (d) 0 to 30 phr of at least one additive. A weight ratio of component (i) to component (ii) ranges from 1:0 - 10:1, or 1:0 - 7:1, or 1:0 - 5:1, or 1:0 - 3:1.

### DRAWING DESCRIPTION

FIG. 1 is a schematic representation of a GPC graph showing the low molecular weight broadness index (LMBI) for an embodiments of HSBC precursor before visbreaking.
FIG. 2 is a schematic representation of a GPC graph showing the LMBI for a visbroken HSBC made from the HSBC precursor in FIG. 1.

### DESCRIPTION

The following terms will be used throughout the specification.

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of A, B, and C" means one or more members selected from the group consisting of A, B, and C. Thus, it includes A only, B only, C only, A and B, A and C, B and C, and A, B, and C.

A list of embodiments recited as "A, B, or C" is interpreted to include A only, B only, C only, or any combination of two or more of A, B, and C, unless the context clearly indicates otherwise.

"Any of A, B, or C" means one member selected from A, B, and C.

If used, "any of A, B, and C" means one or more members selected from A, B, and C, and is intended to have the same scope as "at least one of A, B, and C."

"Vinyl aromatic unit content" or VAC of a block copolymer refers to the weight % of polymerized vinyl aromatic monomers, e.g., styrene, para-methylstyrene, etc., in the block copolymer, calculated by dividing the sum of molecular weight of all vinyl aromatic units by total molecular weight of the block copolymer. VAC can be determined using proton nuclear magnetic resonance spectroscopy ($^1$H NMR) and $^{13}$C NMR. VAC sometimes is used interchangeably with polystyrene content (PSC).

"Butylene unit content" refers to the content, in weight %, of the butylene units ("B") relative to all diene based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by $^1$H NMR and $^{13}$C NMR.

"Molar mass" or $M_m$ refers to the mass of one mole of a specific substance, expressed in kg/mol.

"Polystyrene apparent molecular weight" or Ms refers to the molecular weight in kg/mol of a polymer or copolymer, as measured by gel permeation chromatography (GPC) calibrated with polystyrene standards, in accordance with ASTM D5296. The GPC detector may be an ultraviolet detector, a refractive index detector, or a combination thereof. A polymer or copolymer having a given Ms exhibits the same GPC elution time as a polystyrene standard having the same molecular weight. Unless otherwise specified, molecular weight values recited herein refer to the GPC peak molecular weight (Mp) corresponding to the apex of a given polymeric peak.

"GPC major peak molecular weight" refers to the $M_p$ of the peak with the highest detected intensity among all the GPC peaks corresponding to polymeric species. Each block copolymer as measured in GPC has several $M_p$'s but has only one GPC major peak molecular weight, the major peak being selected from polymeric peaks having a GPC peak molecular weight above 5 kg/mol.

"$M_p$ of a block segment" in a block copolymer refers to the GPC molecular weight corresponding to polymer chains or chain segments comprising the monomer units of that block. For block copolymers, the Mp of a given block may be determined from a gel permeation chromatography (GPC) analysis conducted in accordance with ASTM D5296, using calibration with polystyrene standards, by identifying a GPC signal attributable to the monomer units of the block. Such identification may be carried out using a detector selective for the monomer units of the block, such as an ultraviolet (UV) detector for vinyl aromatic blocks, optionally in combination with a refractive index detector. For example, for a styrenic block "S," the Mp corresponds to the apex of the styrenic-derived GPC peak. In embodiments, individual GPC block molecular weight can be calculated by the difference of $M_p$ measured before and after the considered block polymerization. For example, molecular weight of block "S" is the $M_p$ of species S-R minus the $M_p$ of block "R."

A "block" (e.g., block "R" or block "S") refers to a polymer segment that is defined by the predominant chemical units intentionally incorporated into that segment and responsible for its characteristic properties. Thus, a block designated as E/B, EP/MB, E/B/S, or the like comprises primarily the listed units, but may also contain minor amounts of other units arising from polymerization, hydrogenation, catalyst selectivity, monomer feed composition, or subsequent chemical modification. Such minor units may include non-hydrogenated units, partially hydrogenated units, isomerized units, or residual vinyl aromatic units, provided that they do not materially alter the defining characteristics of the block. The slash-separated ("/") block designations are used solely to identify the principal unit types present and do not imply a specific sequence, ordering, or compositional ratio unless expressly stated.

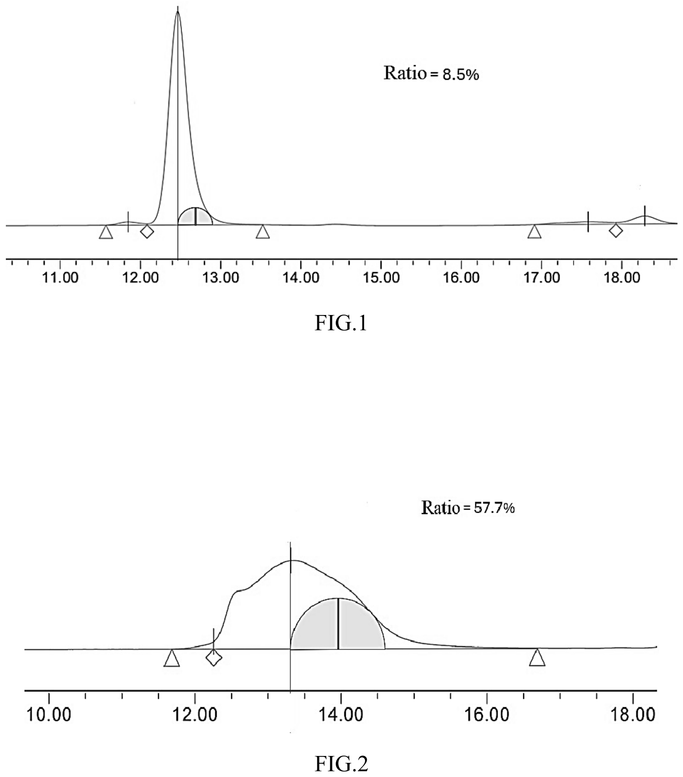

"LMBI" or "Low Mw Broadness Index" represents the relative presence of a broad variety of low-molecular-weight polymeric chains compared to the most represented polymer species as visible in a gel permeation chromatography (GPC) trace obtained using a refractive index detector. To determine the LMBI: 1) identify the highest polymer peak in the GPC chromatogram (the GPC major peak molecular weight Mp) and draw a vertical line passing through its maximum height; 2) draw the largest half-circle whose arc lies entirely below the GPC curve on the low-molecular-weight side of the vertical line; 3) measure the height of the half-circle, i.e., its radius. The LMBI is calculated as the ratio of the circle's radius to the height of the highest peak. FIGS. 1 and 2 illustrate the LMBI for a HSBC precursor and a visbroken HSBC (made from the HSBC precursor), respectively.

"Visbroken hydrogenated styrenic block copolymer" or "visbroken HSBC" refers to a HSBC that has undergone controlled polymer chain scission, meaning the breaking or cleaving of covalent bonds within the polymer backbone, branched chains, pendant groups, or grafted polymer chains under conditions that generate free radicals or other reactive species capable of altering the polymer's molecular-weight distribution. The visbroken HSBC is distinguished from a precursor (non-visbroken) HSBC by measurable changes in molecular-weight distribution, including a Low Mw Broadness Index (LMBI) greater than or equal (≥) to 25%, with the LMBI value being subject to a measurement tolerance of ± 2% points, as determined herein, and by corresponding changes in melt-flow behavior, chain-end concentration, and dynamic-mechanical properties associated with controlled chain scission. Visbroken HSBC may be interchangeably termed as m-HSBC or modified HSBC.

"HSBC" refers to a hydrogenated styrenic block copolymer. The HSBC is a hydrogenated form of an unhydrogenated styrenic block copolymer (USBC). HSBC are selectively hydrogenated when a substantial proportion (e.g., > 50%) of one type of unsaturated bonds, usually olefinic bonds originating from the conjugated diene units, are hydrogenated, while most (e.g., > 90%) of other unsaturated bonds, usually aromatic bonds, are non-hydrogenated. In the present disclosure, the term "HSBC" includes the hydrogenated polymer in its isolated form prior to visbreaking (also referred to herein as an "HSBC precursor"), which corresponds to the polymer product obtained after removal of solvent by methods such as steam stripping, drying, etc. The resulting product, after solvent removal can be processed to obtain product forms such as pellets, extrudates, or flakes; or can be further modified to form a visbroken HSBC through controlled polymer chain scission.

"Hydrogenation level" refers to the level (in %) of saturation of the double bonds (e.g., olefinic, aromatic, etc.) in a block copolymer, can be measured by $^1$H NMR.

"Residual unsaturation" or "RU" refers to the level of olefinic unsaturation, i.e., carbon-carbon double bonds of a block copolymer, expressed in milliequivalent per gram (meq/g). One equivalent here is one mole of olefinic double bonds. RU can be measured using $^1$H NMR or ozonolysis titration.

"Unit" refers to the structural building block derived from one monomer following its polymerization, representing a repeating entity that forms part of the polymer or copolymer chain. Unlike a "monomer," which is the individual molecule before polymerization, a "unit" is the transformed version of the monomer after undergoing the polymerization process. A polymerized unit can be further transformed into a hydrogenated unit or a functionalized unit.

"Coupling efficiency" or "CE" refers to the weight of coupled polymer molecules divided by the total weight of both coupled and uncoupled polymer molecules, expressed as a percentage (%). CE can be used to determine the amount of diblock or more generally of "uncoupled arms" content in the overall block copolymer. For example, if the coupling efficiency is 80%, the polymer will contain 20 wt.% diblock or uncoupled arms and 80 wt.% triblock and multi-arm species.

"Polydispersity index" or "PDI" refers to a ratio of a weight average molecular weight ($M_w$) to a number average molecular weight ($M_n$), sometimes also called as molecular weight distribution. PDI is used to indicate distribution of polymer chain molecular weights in a given polymer. The PDI can be calculated over the total GPC, or a fraction of the GPC such as a peak between two extreme apparent molecular weight values.

"Tangent Delta" or tan delta or tan D or tan δ or tan δ refers to the ratio between the loss modulus and the elastic modulus. Tan δ is also referred to as damping factor, dissipation factor or loss factor, commonly used as a measure of the damping in a viscoelastic system. Tan δ value can be measured by DMA (Dynamic Mechanical Analysis).

"Tan δ peak maximum" or tan δ max refers to the local maximum of the damping factor of a material, as measured by DMA. In a DMA test, the tan δ of the material is recorded over a range of temperatures, resulting in several broad peaks within the measured temperature range. Each of these peaks has a maximum value, referred to as "tan δ peak maximum."

"Tan δ peak temperature" or T (tan δ max) refers to the temperature at which the maximum of the tan δ peak is observed, measured at 10 rad/s.

"Aromatic blocky proton index" or ArBPI refers to a fraction, expressed as a percentage, of aromatic protons that are blocky in the total aromatic protons of a block copolymer. The ArBPI can be measured by $^1$H NMR and is computed by equation:

$$ArBPI\ (\%) = 100\% * \frac{\text{Integral2}}{\text{Integral1}}$$

where Integrall is obtained by integrating the $^1$H NMR spectrum from 7.5 ppm to 6.0 ppm; and Integral-2 is obtained by integrating the $^1$H NMR spectrum from the signal minimum in the region between 6.9 ppm and 6.6 ppm, to 6.0 ppm.

"Aromatic proton contents" refer to the protons (expressed as a percentage of all protons) attached to aromatic carbon atoms within an aromatic ring structure. In $^1$H NMR, aromatic protons typically resonate within the chemical shift range of 7.5 to 6.0 ppm.

"Aliphatic methyl proton index" or AIMPI refers to a fraction, expressed as a percentage, of aliphatic protons that belong to methyl groups attached to an aliphatic carbon, relative to the total aliphatic protons in a block copolymer. The AIMPI can be measured by $^1$H NMR and is computed by equation:

$$AlBPI\ (\%) = 100\% * \frac{\text{Integral4}}{\text{Integral3}}$$

where Integral3 is obtained by integrating the $^1$H NMR spectrum from 2.99 ppm to 0.4 ppm; and Integral4 is obtained by integrating the $^1$H NMR spectrum from the signal minimum in the region between 1.0 ppm and 0.8 ppm, to 0.4 ppm.

"Complex modulus" or G* of a block copolymer is a material property that characterizes the polymer's resistance to deformation under oscillatory shear stress, measured by DMA.

"Gel content" refers to the fraction of a visbroken HSBC that remains insoluble after immersion in toluene, expressed as weight percentage (wt.%) of the visbroken HSBC prior to immersion. In embodiments, the gel content is < 10, or < 5, or < 1, or > 0.01 wt.%, corresponding to dissolution of > 90, or > 95, or > 99 wt.% of the visbroken HSBC in toluene.

"Gel Content Test" refers to the determination gel content by placing a known weight of visbroken HSBC (G1) in a volume of toluene equal to 20 times the sample volume at room temperature (e.g., 25°C) for a period sufficient to reach equilibrium, for example about 24 hours. The mixture is then filtered to recover the insoluble fraction, which is dried to remove solvent and weighed to obtain the insoluble content weight (G2). Gel content is calculated as: 100% x (G2 / G1) and reported as wt.%.

The disclosure relates to a visbroken hydrogenated styrenic block copolymer (visbroken HSBC) obtained through controlled polymer chain scission of a HSBC precursor and, in certain embodiments, to a functionalized visbroken HSBC (f-m-HSBC) derived therefrom. The resulting visbroken HSBC with a low melt flow rate exhibits an optimized balance of elasticity, melt strength, and dimensional stability. The visbroken HSBC is suitable for use in foam and foam-forming compositions, including polymer foams and related lightweight or cushioning materials.

(Visbroken Hydrogenated Styrenic Block Copolymers): The visbroken HSBC is produced by subjecting a HSBC precursor to controlled polymer chain scission. In embodiments, the HSBC precursor is a linear, radial, or branched block copolymer comprising at least one block "S" composed of vinyl aromatic units and at least one rubbery block "R" (block "R") composed of hydrogenated diene units, optionally containing vinyl aromatic units. The HSBC precursor can have any of diblock, triblock, tetrablock, pentablock, and higher-order block structure, or mixtures thereof. The vinyl aromatic units are derived from polymerized vinyl aromatic monomers, while the hydrogenated diene units, prior to hydrogenation, are derived from polymerized conjugated diene monomers.

During the chain-scission process, covalent bonds within the HSBC precursor are cleaved, resulting in a redistribution of molecular weight and formation of shorter polymer chains for a visbroken HSBC with increased melt flow rate.

In embodiments, at least one block "S" of the HSBC precursor has a GPC molecular weight ($M_p$) of > 20, or > 22, or > 25, or 15 - 100, or 15 - 80, or < 100, or < 80, or < 60, or 20 - 80, or 22 - 80, or 20 - 40 kg/mol.

In embodiments, the HSBC precursor has GPC major peak molecular weight ($M_p$) > 200, or < 600, or 200 - 600, or 220 - 550, or 230 - 500, or 240 - 450, or 210 - 450, or 250 - 500 kg/mol.

In embodiments, the visbroken HSBC is derived from the HSBC precursor having linear or branched (multi-arm) structure selected from: S-R, (S-R)$_n$X, S-R-S, S-R-S-R, R-S-R-S-R, (R-S-R)$_n$X, S-R-S-R-S, (S-R-S)$_n$X, and mixtures thereof; where n is an integer from 2 to 30, or 2 to 20, or 2 to 10, and X is a residue of a coupling agent.

In embodiments, each block "R" is selected from E/B, E/B/S, EP/MB, EP/MB/S, E/B/EP/MB and combinations thereof.

In embodiments, block "R" in the form of E/B contains ethylene ("E") units and butylene ("B") units, corresponding to hydrogenated 1,4-butadiene and hydrogenated 1,2-butadiene units, respectively. The ethylene ("E") unit content can be < 55, or < 40, or < 30, or > 10 wt.%, based on total weight of the block "R."

In embodiments, block "R" in the form of E/B/S contains ethylene ("E") units, butylene ("B") unit, and vinyl aromatic units. The ethylene ("E") units can be < 55, or < 40, or < 30, or > 10 wt.%, based on the combined weight of the "E" and "B" units.

In embodiments, block "R" in the form of EP/MB contains ethylene-propylene (EP) units and methyl-butylene (MB) units, where each EP unit corresponds to a hydrogenated 1,4-isoprene unit and each MB unit corresponds to a hydrogenated 3,4-isoprene and/or a hydrogenated 1,2-isoprene unit. The MB unit content can be > 5, or > 10, or > 25, or > 40, or < 70 wt.%, based on total weight of the block "R."

In embodiments, block "R" in the form of EP/MB/S contains EP units, MB units, and vinyl aromatic units. The MB units content can be > 5, or > 10, or > 25, or > 40, or < 70 wt.%, based on total weight of the EP and MB units.

In embodiments, block "R" in the form of E/B/EP/MB contains of ethylene ("E") units, butylene ("B") units, EP units, and MB units. The ethylene ("E") unit content can be < 55, or < 40, or < 30, or > 10 wt.%, based on total weight of the block "R."

In embodiments, the coupling agent used to prepare multiblock HSBC precursors includes bi- or polyfunctional compounds, for example divinylbenzene, halides of aliphatic or araliphatic hydrocarbons (e.g., 1,2-dibromoethane, bis(chloromethyl)benzene), silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, ketones, esters, anhydrides, epoxides, and mixtures thereof. In embodiments, the coupling agent is selected from methyltrimethoxysilane, methyltriethoxysilane, tetramethoxysilane, dimethyladipate, gamma-glycidoxypropyltrimethoxy silane, and mixtures thereof.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block "S" has a hydrogenation level of < 30%, or < 20%, or < 10%, or < 5%, based on total aromatic double bonds. In embodiments, diene units in each block "R" have a hydrogenation level of > 50%, or > 55%, or > 60%, or > 65%, or > 90%, or > 95%, or > 98%, or > 99%, or < 90%, or 50 - 98%, or 50 - 90%, or 55 - 85%, or 60 - 80%, or 65 - 90%, or 50 - 75%.

The visbroken hydrogenated styrenic block copolymer comprises the same types of block architectures as the HSBC precursor, including diblock and triblock species, although at reduced molecular weight. Examples of visbroken HSBC structures include diblock, triblock, and multiblock architectures derived from S and R blocks, such as S-E/B, S-EP/MB, S-E/B/EP/MB, S-E/B/S, S-EP/MB/S, and their coupled or extended forms including $(S-E/B)_nX$, $(S-EP/MB)_nX$, $(S-E/B/EP/MB)_nX$, $(S-E/B/S)_nX$, $(S-EP/MB/S)_nX$, S-E/B-S, S-EP/MB-S, S-E/B/EP/MB-S, S-E/B/S-S, S-EP/MB/S-S, $(S-E/B-S)_nX$, $(S-EP/MB-S)_nX$, $(S-E/B/EP/MB-S)_nX$, $(S-E/B/S-S)_nX$, $(S-EP/MB/S-S)_nX$, and multiblock sequences such as S-E/B-S-E/B, S-EP/MB-S-EP/MB, S-E/B/EP/MB-S-E/B/EP/MB, S-E/B/S-S-E/B/S, S-EP/MB/S-S-EP/MB/S, S-E/B-S-E/B-S, S-EP/MB-S-EP/MB-S, S-E/B/EP/MB-S-E/B/EP/MB-S, S-E/B/S-S-E/B/S-S, S-EP/MB/S-S-EP/MB/S-S, E/B-S-E/B-S-E/B, EP/MB-S-EP/MB-S-EP/MB, E/B/EP/MB-S-E/B/EP/MB-S-E/B/EP/MB, E/B/S-S-E/B/S-S-E/B/S, EP/MB/S-S-EP/MB/S-S-EP/MB/S, and their coupled analogs including $(E/B-S-E/B)_nX$, $(EP/MB-S-EP/MB)_nX$, $(E/B/EP/MB-S-E/B/EP/MB)_nX$, $(E/B/S-S-E/B/S)_nX$, $(EP/MB/S-S-EP/MB/S)_nX$, as well as mixtures thereof. In these structures, n is an integer from 2 to 30 and X is a residue of a coupling agent.

In embodiments, when the visbroken HSBC contains blocks such as E/B, E/B/EP/MB, or E/B/S, the butylene unit ("B") content is from 60 - 90 wt.%.

In embodiments, the visbroken HSBC has an S-E/B-S structure.

In embodiments, chain scission predominantly occurs in the butylene ("B"), EP units, or MB units of block "R" (e.g., > 80% of scission events), while chain scission within ethylene or vinyl aromatic units can promote undesirable crosslinking rather than simple chain cleavage.

In embodiments, the visbroken HSBC comprises mixtures of diblock species and multiblock species. The diblock fraction can be 5 - 90, or 20 - 90, or 35 - 85, or 40 - 70, or 45 - 65, or 30 - 65, or 45 - 80, or 5 - 20, or > 30, or < 80 wt.%. The multiblock fraction can be 10 - 80, or 15 - 65, or 30 - 60, or 35 - 55, or 35 - 70, or > 20, or < 70 wt.%, based on total weight of the visbroken HSBC.

In embodiments, the visbroken HSBC has a coupling efficiency (CE) of > 10%, or > 20%, or 10 - 100%, or 20 - 95%, or 70 - 95%, or > 90%, or 80 - 98%, or 85 - 95%.

In embodiments, the visbroken HSBC has a residual unsaturation (RU) of 0 - 0.4, or 0 - 0.2, or 0.001 - 0.1, or up to 0.5, or < 0.4, or < 0.3, or < 0.2, or < 0.1, or > 0.001 meq/g.

In embodiments, the visbroken HSBC has a butylene unit ("B") content of > 35, or > 38, or > 60, or < 95, or 35 - 95, or 35 - 80, or 38 - 75 wt.%, based on weight of the visbroken HSBC.

In embodiments, the visbroken HSBC has a total VAC of < 70, or < 60, or < 55, or > 10, or 5 - 70, or 5 - 60, or 10 - 55, or 15 - 50, or 15 - 40 wt.%, based on total weight of the visbroken HSBC.

In embodiments, the visbroken HSBC has a GPC major peak molecular weight (Mp) of > 200, or < 600, or 200 - 600, or 220 - 550, or 220 - 500, or 240 - 450, or 200 - 450, or 250 - 500 kg/mol.

In embodiments, the GPC molecular weight ($M_p$) of at least one block "S" in the visbroken HSBC remains within ± 20% of the GPC molecular weight ($M_p$) of the corresponding block "S" in the HSBC precursor, and in further embodiments within ± 10%, and in still further embodiments within ± 5%, indicating that chain scission occurs predominantly within non-styrenic portions of the polymer. In embodiments, at least one block "S" in the visbroken HSBC has a GPC molecular weight ($M_p$) of > 20, or > 22, or > 25, or 15 - 100, or 15 - 80, or < 100, or < 80, or < 60, or 20 - 80, or 22 - 80, or 20 - 40 kg/mol.

In embodiments, the visbroken HSBC has an aliphatic methyl proton index (AlMPI) of 18 - 45%, or 20 - 42%, or 23 - 40%, or 18 - 38%, or 20 - 35%, or 30 - 45%, or > 18%, or > 23%, or < 45%.

In embodiments, the visbroken HSBC has aromatic proton contents from 1 - 30%, or 1 - 20%, or 5 - 25%, or 3 - 15%, or 4 - 18%.

In embodiments, the visbroken HSBC has an aromatic blocky proton index (ArBPI) of 10 - 100%, or 10 - 50%, or 15 - 45%, or 18 - 42%, or 18 - 50%, or 10 - 42%, or > 18%, or < 45%, or < 100%.

As a result of chain scission within rubbery segments of block "R," the visbroken HSBC exhibits a redistribution of molecular weight characterized by an increased population of lower-molecular-weight species together with a remaining population of higher-molecular-weight species. Because scission occurs in a largely statistical manner along the polymer backbone, the resulting molecular-weight distribution is broadened, as reflected in an increased Low Mw Broadness Index (LMBI). In embodiments, the visbroken HSBC has a LMBI of ≥ 25%, or > 30%, or > 40%, or > 45%, or > 50%, or > 55%, or > 60%, or < 90%, or < 100%, or 25 - 90%, or 30 - 80%, or 30 - 75%, or 35 - 65%.

In embodiments, the visbroken HSBC exhibits an increase in LMBI of at least 5%, or at least 10%, or at least 15%, or at least 20%, relative to the HSBC precursor.

In embodiments in which the HSBC precursor comprising at least one block "S" having a GPC molecular weight ($M_p$) > 20 kg/mol, the HSBC retains strong styrenic domain integrity after chain scission. As a result, despite undergoing controlled visbreaking and exhibiting a broadened molecular-weight distribution, the visbroken hydrogenated styrenic block copolymer exhibits a low melt flow rate relative to visbroken materials derived from precursors having shorter styrenic blocks.

In embodiments, prior to chain scission, the HSBC precursor has a MFR of 0 - 8, or 0.25 - 5, or 0.1 - 5, or < 10, or < 1, or < 5 g/10 min at 190°C with a 2.16 kg load, measured according to ASTM D1238. After visbreaking, the MFR of the visbroken HSBC is even higher than the MFR of the precursor, at least 5% higher, or at least 10% higher, or at least 20% higher, or at least 50% higher, or at least 100% higher, e.g., for an MFR of < 10, or < 5, or < 2, or < 1, or > 0.0001, or 0 - 10 g/10 min under the same measurement conditions at 190°C with a 2.16 kg load, per ASTM D1238.

In embodiments, the visbroken HSBC has a total VAC of 10 - 55 wt.%; a $M_p$ of block "S" of 10 - 35 kg/mol; a GPC major peak $M_p$ of > 200 kg/mol, or 220 - 500 kg/mol; a MFR of < 5, or < 2 g/10 min at 190°C/2.16 kg.

(Optional Functionalizing Agents): In embodiments, the visbroken HSBC is reacted with at least one functionalizing agent to obtain a functionalized visbroken HSBC. In embodiments, a visbroken and functionalized HSBC ("f-m-HSBC") is obtained by: (i) functionalizing a visbroken HSBC, (ii) visbreaking a functionalized HSBC, or (iii) simultaneously performing visbreaking and functionalization of HSBC precursor under melt-reactive or solid-state conditions.

In embodiments, the functionalizing agents are compounds containing a styrenic aromatic group and at least one functional substituent capable of radical grafting or post-grafting reaction. Examples include p-styryltrimethoxysilane, p-styryltriethoxysilane, methacryloxy-functional styrenes, glycidyl-functional styrenes, amino-functional styrenes, and mixtures thereof. Non-functional styrenic monomers (e.g., para-methylstyrene, para-ethylstyrene, alpha-methylstyrene) are not functionalizing agents within the present invention unless derivatized to include a reactive functional group.

In embodiments, the functionalizing agents are acrylate-type agents, such as functional (meth)acrylates capable of introducing a polar or reactive group onto the polymer backbone. Such agents include methacrylic acid, acrylic acid, glycidyl acrylate, glycidyl methacrylate, 2-hydroxyethyl(meth)acrylate, hydroxypropyl(meth)acrylate, dimethylaminoethyl methacrylate, methacrylamide, alkyl(meth)acrylamides, and mixtures thereof. Non-functional acrylates (e.g., methyl acrylate, ethyl acrylate, butyl acrylate) may also be used for graft modification but do not introduce a functional group unless otherwise derivatized. In embodiments, both functional and non-functional acrylates can be included to adjust polarity, compatibility, or reactivity during grafting.

Examples of silane functionalizing agents include vinyltrimethoxysilane (VTMOS), vinyltriethoxysilane (VTEOS), vinyltributoxysilane, vinyldimethoxyethoxysilane, vinyldimethoxybutoxysilane, vinyldiethoxybutoxysilane, allyltrimethoxysilane, allyltriethoxysilane, methacryloxypropyltrimethoxysilane, methacryloxypropyltriethoxysilane, diethoxymethylvinylsilane, and mixtures thereof. Silane-functional styrenic agents (e.g., p-styryltrimethoxysilane, p-styryltriethoxysilane) are also suitable due to their combined aromatic and silane reactivity.

Examples of anhydride functionalizing agents include maleic anhydride, tetrahydrophthalic anhydride, dodecenylsuccinic anhydride, itaconic anhydride, methyltetrahydrophthalic anhydride, alkenylsuccinic anhydrides, octenylsuccinic anhydride, chlorendic anhydride, and related anhydrides capable of undergoing free-radical grafting.

In embodiments, the functionalizing agent, when used, is present in amounts of up to 10 phr, or 0.1 - 10, or 0.5 - 8, or 1 - 10, or 0.5 - 5, or 0.1 - 4 phr, based on 100 phr of the HSBC precursor.

(Properties of Visbroken HSBC / f-m-HSBC - from Controlled Visbreaking): The structural changes introduced by controlled chain scission of the HSBC precursor, including redistribution of molecular-weight species, modification of block-to-block connectivity, and changes in viscoelastic damping behavior, impart distinctive rheological and mechanical properties to the resulting visbroken HSBC and, in certain embodiments, to a functionalized visbroken HSBC. These properties are intrinsic to the polymer architecture produced by the visbreaking and optional functionalization steps described herein and are characterized by retained melt strength, elastic recovery, and dimensional stability while maintaining a low MFR. The visbroken HSBC or f-m-HSBC can be provided in pellet form, enabling convenient use in standard melt-processing equipment, where the material exhibits solid, elastomeric behavior suitable for foam and foam-forming applications.

In embodiments, each visbroken HSBC and f-m-HSBC independently has at least one of the following properties: A tan δ value at 50°C of 0.08 - 1, or 0.10 - 0.90, or 0.11 - 0.80, or 0.12 - 0.70, or 0.08 - 0.65, or 0.12 - 0.70, or > 0.08, or < 1.

A tan δ peak (TanDmax) temperature of -42 to 20°C, or -38 to 10°C, or -35 to 5°C, or -34 to 0°C, or -42 to -0°C, or -34 to -3°C, or > -42°C, or < 0°C, measured at 10 rad/s.

A complex modulus (G*) at 100°C of 10 - 2000, or 30 - 1800, or 50 - 1600, or 100 - 1500, or 200 - 1000, or 50 - 600, or 100 - 500, or 150 - 450, or > 10, or > 20, or > 50, or < 1000 kPa.

A Shore A hardness (10 seconds) of 10 - 60, or 15 - 55, or 20 - 50, or 30 - 45, or 25 - 45, or > 25, or < 50, measured according to ASTM D2240.

A tensile strength of 1 - 20, or 1 - 15, or 1 - 10, or 1 - 8, or 2 - 7, or > 1, or < 15 MPa, measured according to ASTM D412.

An elongation at break of 200 - 1000%, or 500 - 900%, or 550 - 800%, or 600 - 750%, or 550 - 700%, or > 600%, or < 900%, measured according to ASTM D412.

A tear strength of > 10, or < 40, or 10 - 40, or 15 - 35, or 10 - 30, or 15 - 25 N/mm, measured according to ASTM D412.

A melt viscosity at 140°C of > 150000, or < 300000, or 150000 - 300000, or 160000 - 250000, or 165000 - 200000 cP (150 - 300 Pa·s), measured according to ASTM D3835.

A melt viscosity at 190°C of > 12000, or < 40000, or 14000 - 40000, or 15000 - 30000, or 16000 - 25000 cP (12 - 40 Pa·s), measured according to ASTM D3835.

A gel content of < 10, or < 5, or < 1, or > 0.01 wt.%, based on total weight of the visbroken HSBC prior to immersion in toluene.

(Chain Scission Mechanism): The visbroken HSBC is produced by subjecting a HSBC precursor to controlled polymer chain scission. The chain scission can be induced by exposing the HSBC precursor to any of ultraviolet (UV) radiation, gamma radiation, electron beam, microwave energy, X-ray radiation, heat, heated air, elemental oxygen, a chain scission agent, or combinations thereof (e.g., gamma radiation together with a chain scission agent).

In embodiments, the chain scission agent is selected from the group consisting of organic peroxide, hydrogen peroxide, sodium hypochlorite, ozone, potassium permanganate, sodium periodate, periodic acid, peracids (e.g., peracetic acid, performic acid), azobisisobutyronitrile (AIBN) or other azo initiators, Fenton-type redox systems, halogenating agents (e.g., chlorine, N-halosuccinimides), strong acids that promote backbone cleavage (e.g., sulfuric acid, methanesulfonic acid, trifluoroacetic acid, triflic acid), strong bases capable of inducing β-scission (e.g., potassium tert-butoxide, sodium tert-butoxide, sodium amide, lithium diisopropylamide), photochemical sensitizers (e.g., benzophenone, acetophenone, benzoyl peroxide, anthraquinone, thioxanthone), and mixtures thereof.

In embodiments, the chain scission agent is an organic peroxide selected from dicumyl peroxide (DCP), 1,3-bis(tert-butylperoxyisopropyl) benzene, diacyl peroxides, alkyl peresters, percarbonates, dilauroylperoxide (DLPO), dibenzoyl peroxide (DBPO), tert-butyl peroxy-2-ethylhexanoate (TBPEH), tert-butyl peroxy-isobutyrate (TBPIB), 1,1-di-(tert-butylperoxy) cyclohexane (DTBPC), tert-butyl perbenzoate (TBPB), 2,5-dimethyl-2,5-di (tert-butylperoxy) hexane (DBPH), 2,5-dimethyl-2,5-di (tert-butylperoxy) hexyne-3 (DYBP), di-tertbutyl peroxide (TBP), cumene hydroperoxide (CHP), tert-butyl hydroperoxide (TBHP), lauroyl peroxide, dipropionyl peroxide, p-menthane hydroperoxide, diphenylcyclohexyl peroxide, 3,6,9-triethyl-3,6,9-trimethyl-1,4,7-triperoxonane, t-butylperoxy-maleic acid, OO-(t-butyl) O-isopropyl monoperoxycarbonate, OO-t-butyl O-(2-ethoxyl)monoperoxycarbonate, OO-t-amyl O-(2-ethylhexyl)monoperoxycarbonate, t-butylperoxy acetate, t-amyl peroxy acetate, t-amyl peroxy benzoate, di-t-butyl diperoxy-phthalate, t-butyl cumyl peroxide, α-α-bis(t-butylperoxy), diisopropylbenzene, di-t-butyl peroxide, n-butyl-4,4-bis(t-butylperoxy)valerate, 1,1-di(t-butylperoxy)3,3,5-trimethyl cyclohexane, 1,1-di(t-butylperoxy)cyclohexane, 1,1-di-(t-amylperoxy)cyclohexane, 2,2-di(t-butyl-peroxy)butane, ethyl-3,3,-di(t-butylperoxy)butyrate, 2,2-di(t-amyl peroxy)propane, ethyl 3,3-di(t-amhylperoxy)butyrate, and mixture thereof.

In embodiments, the chain scission agent is used in amounts of 0.001 - 5, or 0.05 - 4, or 0.01 - 3, or 0.001 - 3, or 0.05 - 3 phr, based on 100 phr of the HSBC precursor.

(preparation of Visbroken / Functionalized Visbroken HSBC): In embodiments, a visbroken HSBC is prepared from a HSBC precursor by inducing controlled polymer chain scission. The chain scission can be effected by exposure to ultraviolet (UV) radiation, gamma radiation, electron beam, microwave energy, X-ray radiation, heat, heated air, elemental oxygen and a chain scission agent. Chain scission agents include free-radical initiators such as organic peroxides, hydroperoxides, peresters, percarbonates, persulfates, azo initiators, and combinations thereof.

In embodiments, the chain scission is performed in an extruder, e.g., single, twinscrew extruder, or other melt-reactive equipment capable of maintaining a controlled thermal and shear environment with melt processing zones, in the presence of a chain scission agent. The extrusion maximum temperature can be 100 - 400°C, or 130 - 380°C, or 150 - 350°C, or 170 - 340°C, or 170 - 400°C, or 100 - 340°C, or 270 - 400°C, or 280 - 370°C, or 290 - 350°C, or > 100°C, or > 280°C, or < 360°C and the residence time can be 5 sec - 10 min, or 5 - 30 min, or 20 sec - 2 min.

In embodiments, the visbroken HSBC is produced using two or more discrete chain-scission stages ("multi-chop visbreaking") or more than one visbreaking pass. In multi-chop visbreaking, a HSBC precursor or partially visbroken intermediate is subjected to chain-scission conditions in a first melt-processing zone and subsequently subjected to one or more additional chain-scission events in downstream zones or in a second pass through the same or different melt-processing equipment. Each stage may utilize the same or different temperatures, shear profiles, residence times, chain-scission agent, or chain-scission agent concentrations. Multi-chop visbreaking can be performed in multiple passes through a single extruder, in multizone extruders with sequential initiator addition, or in cascaded extruders. Multi-chop visbreaking provides a means of adjusting the extent and distribution of chain cleavage beyond that achievable in a single stage.

In embodiments, a multi-chop process includes introducing a second or different HSBC precursor into a downstream zone or into a second visbreaking stage such that the polymer melt during a later stage comprises a mixture of (i) a first-stage visbroken intermediate and (ii) a fresh HSBC precursor. This enables tailoring of molecular-weight distribution and low-molecular-weight species formation in ways that differ from visbreaking a pre-mixed blend in a single stage.

In embodiments, different chain-scission agents are used in different stages of multi-chop visbreaking. For example, a first stage can employ a dialkyl peroxide having a first decomposition temperature, while a second stage employs a perester, hydroperoxide, percarbonate, or azo initiator having a different decomposition temperature or radical-generation profile. Using sequential initiators provides additional control over chain scission relative to a single-initiator process.

In embodiments, the temperatures employed in sequential visbreaking stages are intentionally different. A subsequent stage may be operated at higher temperature to accelerate chain scission, or at lower temperature to moderate radical activity while maintaining melt homogeneity. Adjusting thermal profiles across stages provides further control of molecular-weight distribution and chain-scission uniformity.

In embodiments, the chain-scission step is conducted together with functionalization to produce a functionalized visbroken HSBC (f-m-HSBC). In such embodiments, the functionalizing agent is added concurrently with the chain-scission agent under melt-reactive or solid-state conditions such that radical-mediated chain scission and graft functionalization occur simultaneously. This one-pot process is particularly suitable for functionalizing agents that undergo free-radical grafting, including anhydrides, epoxides, silanes, and functional (meth)acrylates as defined herein. In other embodiments, the functionalizing agent is introduced after formation of the visbroken HSBC to separately control molecular-weight reduction and graft level.

In embodiments, the f-m-HSBC is prepared by a solid phase method in which the HSBC precursor, a chain scission agent, and a functionalizing agent are combined in a reactor at a temperature between 40°C and the melting or softening temperature of the HSBC precursor, and maintained under conditions sufficient to generate radicals without fully melting the polymer matrix. After the reaction is complete, the f-m-HSBC is recovered from the reactor.

In embodiments, the f-m-HSBC contains chemically bound functionalizing groups in an amount of 0.5 - 25, or 0.7 - 10, or 1 - 25, or 1 - 20, or 1 - 15, or 5 - 15, or 1 - 10, or 1 - 5, or > 1, or > 5, or > 10, or > 15, or < 25 wt.%, based on total weight of the f-m-HSBC. The f-m-HSBC can further contain unreacted (free) functionalizing agent in amounts < 1 wt.% or any sub-ranges thereof, based on the total amount of functionalizing agent added. Chemically bound groups include grafted anhydrides, epoxides, silanes, acids, or functional (meth)acrylate moieties introduced through the radical grafting process.

(End-Use Applications): The visbroken HSBC can be incorporated into polymer compositions suitable for foam and foam-forming materials. In embodiments, such compositions exhibit a combination of rubbery elasticity, high melt strength, dimensional stability, and controlled rheology, rendering them particularly suitable for foaming processes that require resistance to melt collapse, cell coalescence, and non-uniform expansion. The visbroken architecture introduces additional chain ends while retaining a substantial population of high-molecular-weight polymer chains, thereby enabling improved toughness, energy absorption, and structural integrity in foamed polymer systems, including under elevated processing temperatures and shear conditions.

In embodiments, a polymer composition suitable for foam or foam-forming applications comprises: (a) 100 phr of a HSBC component comprising a visbroken HSBC and optionally one or more additional HSBC precursors; (b) 50 to 200 phr of oil; (c) 5 to 50 phr of a polyolefin; and (d) 0 to 30 phr of at least one additive.

In embodiments, a polymer composition comprises: (a) a combination of (i) a visbroken HSBC and/or a f-m-HSBC, and (ii) a HSBC precursor that has not been visbroken, at a ratio of (i) to (ii) of 1:10 to 10:1, or 1:7 to 7:1, or 1:5 to 5:1, or 1:3 to 3:1, wherein the combined amount of components (i) and (ii) is 100 phr, based on 100 phr of component (a), (b) 50 - 200 phr of oil, (c) 5 - 50 phr of a polyolefin, and (d) 0 - 30 phr of at least one additive.

In embodiments, the polyolefin is selected from the group consisting of polyethylene, polypropylene, polyisobutylene, copolymers of ethylene and $C_3$-$C_{20}$ $\alpha$-olefins, ethylene-propylene copolymers, impact-modified polypropylenes, and mixtures thereof.

In embodiments, the polymer composition is prepared by melt mixing the components at a temperature of 200 - 260°C for 2 - 30 minutes using internal mixers, Brabender mixers, or equivalent melt-processing equipment. The resulting polymer compositions exhibit controlled melt flow and enhanced melt strength, making them particularly suitable for subsequent processing at foaming temperatures of 180 - 220°C.

In embodiments, the visbroken HSBC functions as a foam stabilizer, melt-strength enhancer, and rheology modifier within the polymer composition, while the optional precursor HSBC contributes elasticity and structural continuity. The polyolefin component provides melt processability and mechanical support, and the oil component adjusts viscosity, drawability, and compression behavior. The relative amounts of these components can be selected to achieve a balance of low melt flow, high melt strength, and controlled extensional rheology suitable for foaming processes.

In embodiments, polymer compositions containing the visbroken HSBC exhibit high melt strength, controlled shear viscosity, favorable draw ratio, and resistance to deformation under compressive stress, as reflected by compression set performance after thermal exposure. Such compositions are suitable for use in flexible foams, semi-rigid foams, and rigid foams, including cushioning foams, energy-absorbing foams, vibration-damping foams, lightweight structural foams, packaging foams, insulation foams, and molded or extruded foam articles. The polymer compositions can be processed using melt-mixing equipment and foaming techniques commonly employed for thermoplastic and elastomeric foam systems, including batch foaming, extrusion foaming, and compression molding.

In embodiments, the polymer composition exhibits at least one of the following properties:
In embodiments, the polymer composition has a shear viscosity of < 40, or < 35, or < 25, or < 20, or 1 - 40 Pa·s, measured at 200°C and a shear rate of 1000 s$^{-1}$, as determined by capillary rheology in accordance with ASTM D3835.

In embodiments, the polymer composition has a draw ratio of > 4, or > 5, or < 30, or < 20, or 4-30, or 5-20, measured at 200°C using melt strength tester.

In embodiments, the polymer composition has a melt strength (draw force at break) of > 0.0010 N, or < 0.0100, or < 0.0090, or < 0.0080, or 0.0010 - 0.0100 N, measured at 200°C using a melt strength tester.

In embodiments, the polymer composition has a compression set of < 90%, or < 85%, or < 80%, or < 75%, or 2 - 80%, or 5 - 75%, measured after compression at 100°C for 24 hours according to ASTM D395.

(Analytical Methods): The molecular-weight distribution of the visbroken HSBC, including determination of the GPC major peak molecular weight ($M_p$) and the Low Mw Broadness Index (LMBI), is measured by GPC according to ASTM D5296. The GPC chromatogram provides the retention times, peak locations, and peak areas used to determine $M_p$ and to calculate LMBI based on the presence of low-molecular-weight species. The GPC method is operated under conditions appropriate for polymer molecular-weight measurement, including operation in a region where elution time varies linearly with logio(Mw). The GPC chromatogram is presented as a detector response plotted versus elution time or elution volume, the detector signal being proportional to the concentration of polymer species eluting from the column. The resulting trace therefore reflects the relative amount of polymer eluting at each retention time. Using appropriate calibration standards, such as polystyrene narrow standards, each retention time is assigned a corresponding polystyrene-equivalent molecular weight. The GPC columns and operating conditions are selected such that the polymer species elute within the linear calibration region, where retention time exhibits a proportional relationship to the logarithm of molecular weight, enabling accurate determination of the molecular weight distribution.

Proton nuclear magnetic resonance ($^1$H NMR) spectroscopy may be employed to determine (i) the residual unsaturation (RU) and (ii) the aliphatic methyl proton index (AlMPI) of the copolymer. The RU value corresponds to the amount of remaining olefinic units present in the polymer chain. The AlMPI reflects the relative abundance of protons belonging to methyl groups located at the extremity of aliphatic short or long branches. Both RU and AlMPI are obtained by calculations using quantitative integration of the respective resonance signals appearing in the $^1$H NMR spectrum and using chemical units molar mass.

The hydrogenation levels of block "R" and block "S" can be determined using $^1$H NMR spectroscopy by comparing the integrals associated with olefinic protons in the HSBC to those present in the corresponding non-hydrogenated styrenic block copolymer from which it was derived. The hydrogenation level of block "R" is calculated based on the percentage reduction in olefinic proton signal intensity associated with diene units upon hydrogenation. The hydrogenation level of block "S" is assessed by confirming that the aromatic proton signal intensity remains substantially unchanged relative to the non-hydrogenated styrenic block copolymer, indicating that hydrogenation occurs predominantly in the diene-derived segments.

The melt flow rate (MFR) of the visbroken HSBC can be measured according to ASTM D1238 under the designated temperature and load conditions. MFR values are used to characterize the melt-flow behavior of the polymer at elevated temperatures.

(Examples): The following examples are intended to be non-limiting.

The following test methods are used.

Glass transition temperature ($T_g$) of all polymer samples were measured by DMA according to ASTM 4065. The tan $\delta$ peak temperature here is considered to be the $T_g$ of the polymer. Temperature sweep experiments were conducted from -80 to 200°C with a heating ramp of 2°C/min and at 10 rad/s in the shear mode using plate / plate tool unless specified otherwise, where complex modulus (G*), storage modulus (G'), loss modulus (G"), and loss factors (tan $\delta$) were obtained as a function of temperature.

Unless otherwise specified, all reported melt flow rates (MFRs) were measured according to D1238 under 2.16 kg load and at 190°C.

The components used in examples include:
HSBC-1 (precursor) is a hydrogenated block copolymer with structure (S-E/B-S), has VAC of 33 wt.%, major peak $M_p$ of block copolymer of 235 kg/mol, $M_p$ of at least one block "S" of 28 kg/mol, butylene unit ("B") content of 69 wt.%, RU of 0.12 meq/g, and diene units have a hydrogenation level of 99.98%.

HSBC-2 (precursor) is a hydrogenated block copolymer with structure (S-E/B-S), has VAC of 33 wt.%, major peak $M_p$ of block copolymer of 290 kg/mol, $M_p$ of at least one block "S" of 27 kg/mol, butylene unit ("B") content of 41 wt.%, RU of 0.08 meq/g, and diene units have a hydrogenation level of 99.98%.

HSBC-3 (precursor) is a coupled hydrogenated block copolymer with structure $(S-E/B)_nX$ with CE of 95% and contains 5 wt.% of diblock content. HSBC-3 has VAC of 31 wt.%, major peak $M_p$ of block copolymer of 57 kg/mol, $M_p$ of block "S" of 6 kg/mol, butylene unit ("B") content of 40 wt.%, RU of 0.10 meq/g, and diene units have a hydrogenation level of 99.98%.

Peroxide-1 (PO-1): 2,5-dimethyl-2,5-di-(tert-butylperoxy)hexane (DBPH).

Peroxide-2 (PO-2): cumene hydroperoxide (CHP).

MA: maleic anhydride.

Oil: refined, petroleum-based mineral oil.

PP-1: high crystalline impact polypropylene copolymer having a melt index of 60 g/10 min, from SK Geo Centric.

(Examples 1 to 12): 100 parts of HSBC precursors were premixed at 25°C with suitable amounts of peroxides, and, where applicable, with maleic anhydride as a functionalizing agent. The premixed content was then fed into twin screw extruder at 25°C, after which the temperature of the extruder was increased to a temperature in the range of 180 to 330°C (extruder temperature or "ET"). During melt processing in the extruder, controlled polymer chain scission occurred to produce visbroken HSBC and, when a functionalizing agent was included, the functionalization reaction proceeded concurrently to form a functionalized visbroken HSBC (f-m-HSBC). The molten visbroken or f-m-HSBC exiting the extruder die was pelletized using an underwater pelletizer. Under these conditions, the molecular weight of each styrenic block "S" in the visbroken HSBC or f-m-HSBC was substantially retained relative to the corresponding block "S" in the HSBC precursor. The amounts of components and extruder temperatures used for each example are provided in Table 1. The measured properties of the examples are summarized in Table 2.

Table 1

| | Ex-1 | Ex-2 | Ex-3 | Ex-4 | Ex-5 | Ex-6 | Ex-7 | Ex-8 | Ex-9 | Ex-10 | Ex-11 | Ex-12 |
|---|---|---|---|---|---|---|---|---|---|---|---|---|
| HSBC-1 (phr) | 100 | 100 | 100 | 100 | 100 | 100 | - | - | - | - | - | - |
| HSBC-2 (phr) | - | - | - | - | - | - | 40 | 40 | 40 | 70 | 70 | 70 |
| HSBC-3 (phr) | - | - | - | - | - | - | - | - | - | 30 | 30 | 30 |
| Oil (phr) | - | - | - | - | - | - | 60 | 60 | 60 | - | - | - |
| PO-1 (phr) | - | - | - | - | 0.61 | 0.61 | - | - | - | - | - | - |
| PO-2 (phr) | - | - | 0.20 | 0.40 | - | - | - | 0.30 | 0.60 | - | 0.30 | 0.60 |
| MA (phr) | - | - | - | - | 1.22 | 2.05 | - | - | - | - | - | - |
| ET (°C) | - | - | 300 | 300 | 260 | 260 | 300 | 300 | 300 | 300 | 300 | 300 |
| Amount of bound functionalizing agent (wt.%) | - | - | - | - | 0.83 | 1.25 | - | - | - | - | - | - |
| Major Peak $M_p$ (kg/mol) | - | 235 | - | - | - | - | - | 284 | 275 | 58 | - | - |
| ET: Extruder temperature | | | | | | | | | | | | |

Table 2

| | Ex-1 | Ex-2 | Ex-3 | Ex-4 | Ex-5 | Ex-6 | Ex-7 | Ex-8 | Ex-9 | Ex-10 | Ex-11 | Ex-12 |
|---|---|---|---|---|---|---|---|---|---|---|---|---|
| MFR (g/10 min) [190°C/2.16 kg] | < 0.1 | < 0.1 | 3.6 | 5.8 | < 1 | < 1 | 2.1 | - | - | < 0.1 | < 1 | < 1 |
| MFR (g/10 min) [230°C/5 kg] | < 0.1 | 0.1 | 53.5 | 92.9 | 8.4 | 7.3 | 26.97 | - | - | 0.3 | 2.9 | 7.6 |
| Gel content (wt.%) | 0.61 | 0.80 | 0.90 | 0.90 | 1.02 | 1.10 | 1.30 | 0.40 | 0.90 | 1.00 | 0.70 | 1.00 |
| LMBI (%) | 8.5 | ~ 25 | 57.7 | 56 | - | - | 23 | 67 | 85 | 20 | 25 | 39 |

(continued)

|  | Ex-1 | Ex-2 | Ex-3 | Ex-4 | Ex-5 | Ex-6 | Ex-7 | Ex-8 | Ex-9 | Ex-10 | Ex-11 | Ex-12 |
|---|---|---|---|---|---|---|---|---|---|---|---|---|
| RU (meq/g) | 0.12 | 0.12 | 0.12 | 0.12 | 0.12 | 0.12 | 0.08 | 0.08 | 0.08 | 0.08 | 0.08 | 0.08 |

(Examples 13 to 19): Preparation of polymer compositions. Compositions were prepared using visbroken HSBCs in combination with other components. The components were charged into a Brabender mixer and melt-mixed at a temperature of 230°C for 5 minutes to obtain homogeneous polymer compositions. The resulting compositions were discharged from the mixer and allowed to cool to room temperature (25°C). The polymer compositions were then evaluated for property measurements.

Draw ratio and melt strength (draw force at break) was measured using a melt strength tester equipped with a heated barrel, extrusion die, and a pair of take-up wheels or belts for drawing an extruded molten filament. In a representative method, the polymer composition is melted and extruded through a capillary die at a test temperature of 200°C to form a continuous molten strand. The strand was drawn at an increasing take-up speed until breakage occurs. The draw ratio is calculated as the ratio of the take-up speed at break to the extrusion speed at the die. The melt strength (draw force at break) is the tensile force applied to the molten strand at the point of breakage, as measured by a force transducer associated with the melt strength tester. Unless otherwise specified, draw ratio and melt strength values reported herein are measured at 200°C.

Shear viscosity values were determined by capillary rheology using a capillary rheometer in accordance with ASTM D3835 (Standard Test Method for Determination of Properties of Polymeric Materials by Means of a Capillary Rheometer).

The compositions and the corresponding measured properties are reported in Table 3.

Table 3

|  | Ex-13 | Ex-14 | Ex-15 | Ex-16 | Ex-17 | Ex-18 | Ex-19 |
|---|---|---|---|---|---|---|---|
| Block copolymer of Ex-12 (phr) | 100 | - | 50 | - | 90 | - | - |
| Block copolymer of Ex-3 (phr) | - | 100 | - | 50 | - | - | - |
| HSBC-2 (phr) | - | - | - | - | 10 | 100 | - |
| HSBC-1 (phr) | - | - | 50 | 50 | - | - | 100 |
| Oil (phr) | 150 | 150 | 150 | 150 | 150 | 150 | 150 |
| PP-1 (phr) | 10 | 10 | 10 | 10 | 10 | 10 | 10 |
| Properties | | | | | | | |
| Shear viscosity (Pa·s) | 9.5 | 12 | 12.5 | 28 | 13 | 42 | 39 |
| Draw ratio | 9.5 | 6 | 7 | 10.5 | 7.5 | 4.5 | 5.5 |
| Melt strength (N) | 0.0045 | 0.0065 | 0.0070 | 0.0068 | 0.0045 | 0.0085 | 0.0087 |
| Compression set (%) | 83 | 69 | 83 | 65 | 69 | 53 | 57 |

**Claims**

1. A visbroken hydrogenated styrenic block copolymer comprising:

   at least one block "S" composed of vinyl aromatic units, and
   at least one block "R" composed of hydrogenated diene units, the diene units having a hydrogenation level > 50%, measured by $^1$H NMR;
   wherein:
   the visbroken hydrogenated styrenic block copolymer is **characterized by**:

   a Low Mw Broadness Index (LMBI) $\geq$ 25%;
   a GPC major peak molecular weight ($M_p$) of > 200 kg/mol, measured according to ASTM D5296;
   a GPC molecular weight ($M_p$) of at least one block "S" of > 20 kg/mol, measured according to ASTM D5296;
   a residual unsaturation (RU) of up to 0.5 meq/g, measured by $^1$H NMR; and

a melt flow rate (MFR) of 0 to 10 g/10 min at 190°C with a 2.16 kg load, measured according to ASTM D1238.

2. The visbroken hydrogenated styrenic block copolymer of claim 1, wherein the visbroken hydrogenated styrenic block copolymer has at least one of:

a tan $\delta$ value at 50°C of 0.08 to 1, measured by dynamic mechanical analysis;
a tan $\delta$ peak temperature of -42 to 20°C, measured by dynamic mechanical analysis; and
an aliphatic methyl proton index (AlMPI) of 18 to 45%, determined by $^1$H NMR.

3. The visbroken hydrogenated styrenic block copolymer of claim, wherein the visbroken hydrogenated styrenic block copolymer has at least one of:

aromatic protons from 1 to 30%;
an aromatic blocky proton index of 10 to 50%; and
an aliphatic methyl proton index (AlMPI) of 23 to 40%;

all properties are measured by $^1$H NMR.

4. The visbroken hydrogenated styrenic block copolymer of any of claims 1-3, wherein the visbroken hydrogenated styrenic block copolymer has at least one of:

a residual unsaturation (RU) of 0 to 0.4 meq/g; and
a vinyl aromatic unit content (VAC) of < 60 wt.%, measured by $^1$H NMR.

5. The visbroken hydrogenated styrenic block copolymer of any of claims 1-3, wherein the block "S" has a GPC molecular weight ($M_p$) of 22 to 80 kg/mol.

6. The visbroken hydrogenated styrenic block copolymer of any of claims 1-3, wherein the visbroken hydrogenated styrenic block copolymer has a general structure selected from: S-R, (S-R)$_n$X, S-R-S, S-R-S-R, R-S-R-S-R, (R-S-R)$_n$X, S-R-S-R-S, (S-R-S)$_n$X, and mixtures thereof; n is an integer from 2 to 30, and X is residue of a coupling agent.

7. The visbroken hydrogenated styrenic block copolymer of any of claims 1-3, wherein the visbroken hydrogenated styrenic block copolymer has a GPC major peak molecular weight ($M_p$) of 200 to 450 kg/mol.

8. The visbroken hydrogenated styrenic block copolymer of any of claims 1-3, wherein the block "R" is selected from any of E/B, E/B/S, EP/MB, EP/MB/S, E/B/EP/MB, and combinations thereof;

each block E/B is composed of ethylene ("E") units and butylene ("B") units;
each block E/B/S is composed of ethylene ("E") units, butylene ("B") unit, and vinyl aromatic ("S") units;
each block EP/MB is composed of ethylene-propylene (EP) units and methylene-butylene (MB) units;
each block EP/MB/S is composed of ethylene-propylene (EP) units, methylene-butylene (MB) units, and vinyl aromatic ("S") units; and
each block E/B/EP/MB is composed of ethylene ("E") units, butylene ("B") units, ethylene-propylene (EP) units, and methylene-butylene (MB) units.

9. The visbroken hydrogenated styrenic block copolymer of any of claims 1-3, wherein the visbroken hydrogenated styrenic block copolymer has a S-E/B-S;
wherein

each block "S" is composed of styrene units; and
each block E/B is composed of ethylene ("E") units and butylene ("B") units.

10. The visbroken hydrogenated styrenic block copolymer of any of claims 1-3, wherein the visbroken hydrogenated styrenic block copolymer has a gel content < 10 wt.%, measured as described in the specification.

11. The visbroken hydrogenated styrenic block copolymer of any of claims 1-3, wherein the visbroken hydrogenated styrenic block copolymer is functionalized with at least one functionalizing agent to obtain a functionalized modified hydrogenated styrenic block copolymer; and

wherein the functionalizing agent is selected from the group consisting of (meth)acrylates, alkoxysilanes, anhydrides, epoxides, acids, isocyanates, and combinations thereof.

12. A polymer composition comprising:

(a) 100 phr of a hydrogenated styrenic block copolymer component comprising (i) the visbroken hydrogenated styrenic block copolymer of any of claims 1-3 and (ii) a hydrogenated styrenic block copolymer precursor that has not been visbroken, wherein a weight ratio of component (i) to component (ii) ranges from 1:0 to 10:1, or from 1:0 to 7:1, or from 1:0 to 5:1, or from 1:0 to 3:1;
(b) 50 to 200 phr of oil;
(c) 5 to 50 phr of a polyolefin; and
(d) 0 to 30 phr of at least one additive.

13. The polymer composition of claim 12, wherein the polyolefin is polypropylene.

14. The polymer composition of claim 12, wherein the polymer composition has at least one of:

a shear viscosity of 1 to 40 1 Pa·s, measured at 200°C and a shear rate of 1000 s$^{-1}$, as determined by capillary rheology in accordance with ASTM D3835; and
a compression set of < 90%, measured after compression at 100°C for 24 hours according to ASTM D395.

15. The polymer composition of claim 12, wherein the polymer composition has:

a draw ratio of > 4; and
a draw force at break of < 0.0100 N, both are measured at 200°C using a melt strength tester.

Ratio = 8.5%

FIG.1

Ratio = 57.7%

FIG.2

**EUROPEAN SEARCH REPORT**

Application Number

EP 26 15 3733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 063 416 A1 (KRATON POLYMERS RES BV [NL]) 28 September 2022 (2022-09-28)<br>* paragraph [0076] *<br>----- | 1-15 | INV.<br>C08F8/50<br>C08L53/02<br>C08F8/46<br>C08L91/00 |
| | | | **TECHNICAL FIELDS SEARCHED (IPC)**<br><br>C08F<br>C08K<br>C08L |

The present search report has been drawn up for all claims

| Place of search | Date of completion of the search | Examiner |
|---|---|---|
| Munich | 13 May 2026 | Friebe, Lars |

EPO FORM 1503 03.82 (P04C01)

**EP 4 782 468 A1**

## ANNEX TO THE EUROPEAN SEARCH REPORT
## ON EUROPEAN PATENT APPLICATION NO.

EP 26 15 3733

13-05-2026

| Patent document cited in search report | Publication date | Patent family member(s) | Publication date |
|---|---|---|---|
| EP 4063416 A1 | 28-09-2022 | CN 115124664 A | 30-09-2022 |
| | | EP 4063416 A1 | 28-09-2022 |
| | | JP 2022146935 A | 05-10-2022 |
| | | KR 20220131850 A | 29-09-2022 |
| | | US 2022298351 A1 | 22-09-2022 |

EPO FORM P0459

For more details about this annex : see Official Journal of the European Patent Office, No. 12/82